# EUROPEAN PATENT APPLICATION

(11) **EP 4 707 206 A1**
(43) Date of publication of application: **11.03.2026**
(21) Application number: 25193378.4
(22) Date of filing: 01.08.2025
(51) Int. Cl.: B65G 57/03, B25J 9/00, B65G 57/24, B65G 59/02, B65G 59/04, B65G 61/00

(54) **SYSTEM FOR FACILITATING LOADING AND UNLOADING OF OBJECTS AND ASSOCIATED METHOD**

(30) Priority: 05.09.2024 US 202418825876
(71) Applicant: Intelligrated Headquarters LLC, Mason, OH 45040 (US)
(72) Inventor: REST, Adam, Charlotte, 28202 (US)
(74) Representative: Haseltine Lake Kempner LLP

(57) **Abstract**

An example system and associated methods are provided herein. In some embodiments, the system includes an apparatus. In some embodiments, the apparatus includes a support structure comprising an interior area. In some embodiments, the apparatus includes a transport apparatus coupled to the support structure and configured to move a unit through the interior area. In some embodiments, the unit comprises an object and a pallet configured to support the object. In some embodiments, the apparatus includes a plurality of sensors. In some embodiments, each of the plurality of sensors is configured to monitor a portion of the interior area. In some embodiments, first sensor of the plurality of sensors is configured to detect that a bottom edge of the object is in line with an object conveyor. In some embodiments, the apparatus includes one or more manipulators.

## Description

### TECHNOLOGICAL FIELD

Embodiments of the present disclosure relate generally to a system for facilitating loading and/or unloading objects.

### BACKGROUND

Applicant has identified many technical challenges and difficulties associated with loading and/or unloading objects. Through applied effort, ingenuity, and innovation, Applicant has solved problems related to loading and/or unloading objects by developing solutions embodied in the present disclosure, which are described in detail below.

### BRIEF SUMMARY

Various embodiments of the present disclosure are directed to a system for facilitating loading and/or unloading objects and associated methods.

In accordance with one embodiment of the present disclosure a system is provided. In some embodiments, the system includes an apparatus. In some embodiments, the system includes an apparatus. In some embodiments, the apparatus includes a support structure comprising an interior area. In some embodiments, the apparatus includes a transport apparatus coupled to the support structure and configured to move a unit through the interior area. In some embodiments, the unit comprises an object and a pallet configured to support the object. In some embodiments, the apparatus includes a plurality of sensors. In some embodiments, each of the plurality of sensors is configured to monitor a portion of the interior area. In some embodiments, a first sensor of the plurality of sensors is configured to detect that a bottom edge of the object is in line with an object conveyor. In some embodiments, the apparatus includes one or more manipulators. In some embodiments, a first manipulator of the one or more manipulators is configured to perform a first pick and place operation when the bottom edge of the object is in line with the object conveyor.

In some embodiments, the system includes the object conveyor. In some embodiments, the object conveyor is configured to transport the object between the apparatus and one or more locations in proximity to the apparatus.

In some embodiments, the system includes a unit conveyor comprising a first unit conveyor portion and a second unit conveyor portion.

In some embodiments, the first unit conveyor portion is configured to move the unit between a first zone and the apparatus.

In some embodiments, the second unit conveyor portion is configured to move the pallet between the apparatus and a pallet collection unit.

In some embodiments, the second unit conveyor portion is configured to move a rejected unit between the apparatus and a second zone.

In some embodiments, the system includes a controller. In some embodiments, the controller comprises at least one processor and at least one non-transitory memory comprising a computer program code. In some embodiments, the at least one non-transitory memory and the computer program code configured to, with the at least one processor, cause the controller to transmit an instruction to the first manipulator to perform the first pick and place operation when the bottom edge of the object is in line with an object conveyor.

In some embodiments, the support structure comprises a first side having a first interior surface, a second side having a second interior surface, a third side having a third interior surface, and a fourth side having a fourth interior surface.

In some embodiments, the first sensor of the plurality of sensors is disposed on the first interior surface, a second sensor of the plurality of sensors is disposed on the second interior surface, a third sensor of the plurality of sensors is disposed on the third interior surface, and a fourth sensor of the plurality of sensors is disposed on the fourth interior surface.

In some embodiments, the first sensor is configured to monitor a first interior area portion proximate the first interior surface, the second sensor is configured to monitor a second interior area portion proximate the second interior surface, the third sensor is configured to monitor a third interior area portion proximate the third interior surface, and the fourth sensor is configured to monitor a fourth interior area portion proximate the fourth interior surface.

In some embodiments, the apparatus further comprises one or more cameras configured to identify a pick point on the object.

In some embodiments, the one or more cameras are positioned above the object conveyor and disposed on the support structure.

In some embodiments, the first pick and place operation comprises the first manipulator being configured to pick the object, transport the object to the object conveyor, and place the object on the object conveyor.

In some embodiments, the first sensor is configured to detect that a top edge of a second object is in line with an object conveyor.

In some embodiments, the first manipulator is configured to perform a second pick and place operation when the top edge of the second object is in line with the object conveyor.

In some embodiments, the second pick and place operation comprises the first manipulator being configured to pick a third object from the object conveyor, transport the object to a second unit, and place the object on the second unit.

In accordance with another aspect of the disclosure a method is provided. In some embodiments, the method includes causing a transport apparatus to move a unit through an interior area of a support structure of an apparatus. In some embodiments, the unit comprises an object and a pallet configured to support the object. In some embodiments, the method includes detecting, using a first sensor of a plurality of sensors, that a bottom edge of the object is in line with an object conveyor. In some embodiments, each of the plurality of sensors is configured to monitor a portion of the interior area. In some embodiments, the method includes causing a first manipulator of one or more manipulators to perform a first pick and place operation when the bottom edge of the object is in line with the object conveyor.

In some embodiments, the support structure comprises a first side having a first interior surface, a second side having a second interior surface, a third side having a third interior surface, and a fourth side having a fourth interior surface.

In some embodiments, the first sensor of the plurality of sensors is disposed on the first interior surface, a second sensor of the plurality of sensors is disposed on the second interior surface, a third sensor of the plurality of sensors is disposed on the third interior surface, and a fourth sensor of the plurality of sensors is disposed on the fourth interior surface.

In some embodiments, the first sensor is configured to monitor a first interior area portion proximate the first interior surface, the second sensor is configured to monitor a second interior area portion proximate the second interior surface, the third sensor is configured to monitor a third interior area portion proximate the third interior surface, and the fourth sensor is configured to monitor a fourth interior area portion proximate the fourth interior surface.

In accordance with another aspect of the disclosure a method is provided. In some embodiments, the method includes causing a transport apparatus to move a unit through an interior area of a support structure of an apparatus. In some embodiments, the unit comprises an object and a pallet configured to support the object. In some embodiments, the method includes detecting, using a first sensor of a plurality of sensors, that a top edge of the object is in line with an object conveyor. In some embodiments, each of the plurality of sensors is configured to monitor a portion of the interior area. In some embodiments, the method includes causing a first manipulator of one or more manipulators to perform a second pick and place operation when the top edge of the object is in line with the object conveyor.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates a perspective view an environment in accordance with one or more embodiments of the present disclosure;
FIG. 2 illustrates a front view of an example system in accordance with one or more embodiments of the present disclosure;
FIG. 3 illustrates a partial perspective view of an example system in accordance with one or more embodiments of the present disclosure;
FIG. 4 illustrates a partial perspective view of an example system in accordance with one or more embodiments of the present disclosure;
FIG. 5 illustrates a front view of an example apparatus in accordance with one or more embodiments of the present disclosure;
FIG. 6 illustrates a partial top view of an example apparatus in accordance with one or more embodiments of the present disclosure;
FIG. 7 illustrates a partial top view of an example apparatus in accordance with one or more embodiments of the present disclosure;
FIG. 8 illustrates a partial side view of an example apparatus in accordance with one or more embodiments of the present disclosure;
FIG. 9 illustrates a front view of example units in accordance with one or more embodiments of the present disclosure;
FIG. 10 illustrates a perspective view of example objects in accordance with one or more embodiments of the present disclosure;
FIG. 11 illustrates a front view of example pallets in accordance with one or more embodiments of the present disclosure;
FIG. 12 illustrates a flowchart in accordance with one or more embodiments of the present disclosure;
FIG. 13 illustrates a flowchart in accordance with one or more embodiments of the present disclosure; and
FIG. 14 illustrates a block diagram of an example computer processing device in accordance with one or more embodiments of the present disclosure.

### DETAILED DESCRIPTION

Example embodiments will be described more fully hereinafter with reference to the accompanying drawings, in which some, but not all embodiments of disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

### Overview

Example embodiments disclosed herein address technical problems associated with loading and/or unloading objects. As would be understood by one skilled in the field to which this disclosure pertains, there are numerous example scenarios in which it may be desirable to load and/or unload objects.

In many applications, it may be desirable to load and/or unload objects. For example, it may be desirable to unload objects from a unit (e.g., a pallet having one or more objects). As another example, it may be desirable to load objects onto a pallet and/or a unit. In many implementations, it may be desirable to load and/or unload objects in a variety of environments. For example, it may be desirable to load and/or unload objects in a warehouse. As another example, it may be desirable to load and/or unload objects in a distribution center.

Example solutions for loading and/or unloading objects include using one or more devices to load and/or unload objects. However, such example solutions are inefficient, inconsistent, and simplistic. For example, such example solutions are inefficient because such example solutions make unnecessary movements (e.g., unnecessary vertical movements) when loading and/or unloading objects. As another example, such example solutions are inefficient because such example solutions do not include parallel pathways (e.g., conveyors) for transporting unloaded objects and/or units to and from an apparatus that performs the loading and/or unloading. As another example, such example solutions are inconsistent because such example solutions are unable to identify pick points on objects in a consistently accurate manner. As another example, such example solutions are simplistic because such example solutions are unable to load and/or unload objects using one system or apparatus (e.g., such example solutions use different systems and apparatuses for loading and unloading). As such, there is a need for a system and associated methods for facilitating loading and unloading of objects in an efficient, consistent, and sophisticated manner.

Thus, to address these and/or other issues related loading and unloading objects, an example system for facilitating loading and unloading objects and associated methods are provided herein. For example, an embodiment in this disclosure, described in greater details below, includes a system that includes an apparatus. In some embodiments, the system includes an apparatus. In some embodiments, the apparatus includes a support structure comprising an interior area. In some embodiments, the apparatus includes a transport apparatus coupled to the support structure and configured to move a unit through the interior area. In some embodiments, the unit comprises an object and a pallet configured to support the object. In some embodiments, the apparatus includes a plurality of sensors. In some embodiments, each of the plurality of sensors is configured to monitor a portion of the interior area. In some embodiments, a first sensor of the plurality of sensors is configured to detect that a bottom edge of the object is in line with an object conveyor. In some embodiments, the apparatus includes one or more manipulators. In some embodiments, a first manipulator of the one or more manipulators is configured to perform a first pick and place operation when the bottom edge of the object is in line with the object conveyor. Accordingly, the example system and associated methods provided herein enable loading and/or unloading objects in an efficient, consistent, and sophisticated manner.

### Example System

Embodiments of the present disclosure herein include a system for facilitating loading and/or unloading objects. It should be readily appreciated that the embodiments of the system described herein may be configured in various additional and alternative manners in addition to those expressly described herein.

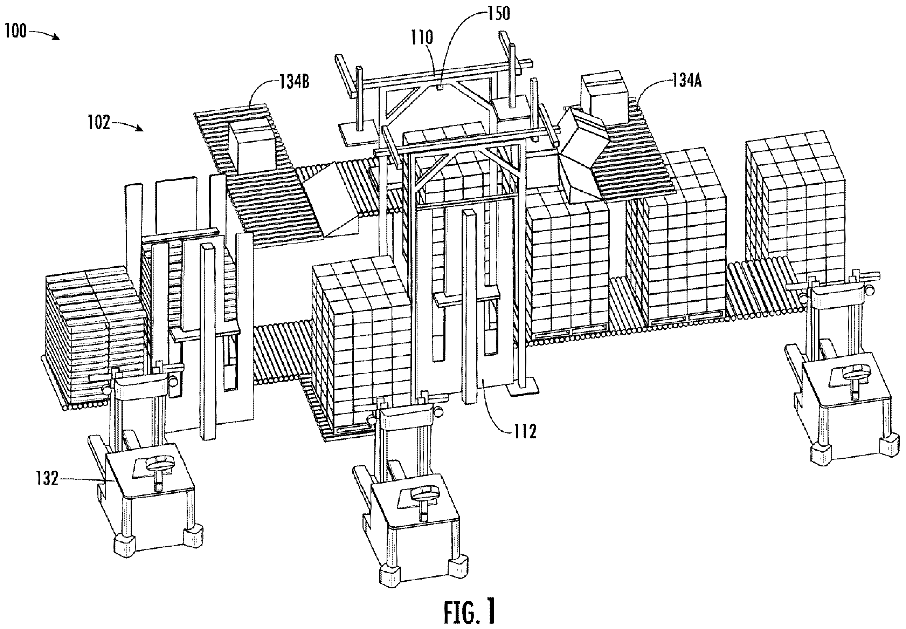

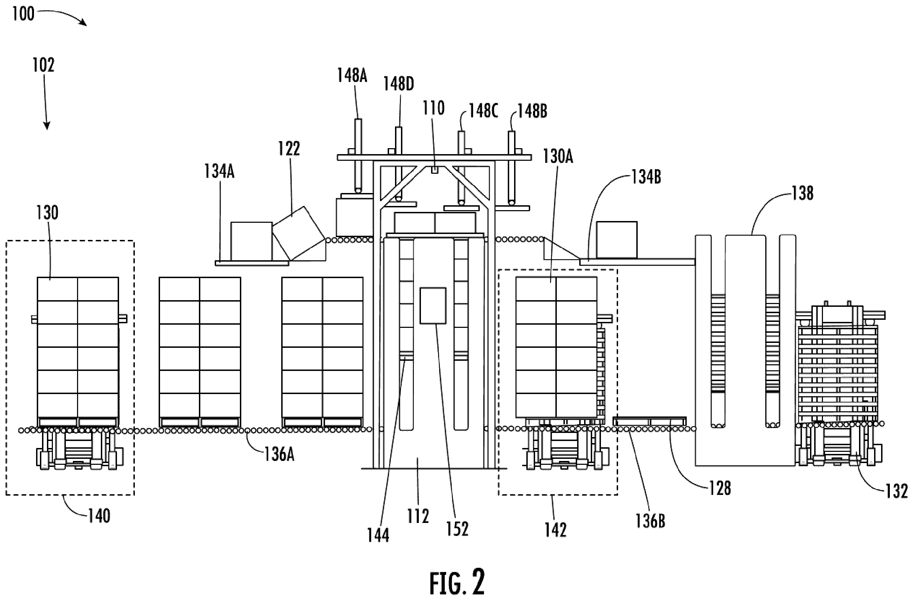

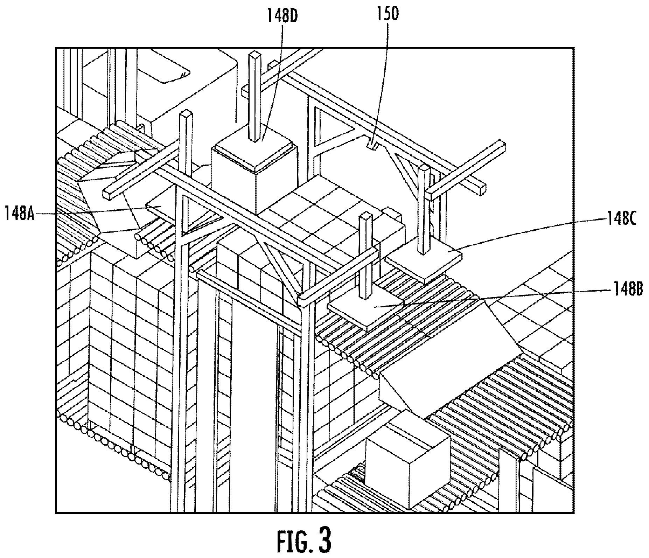

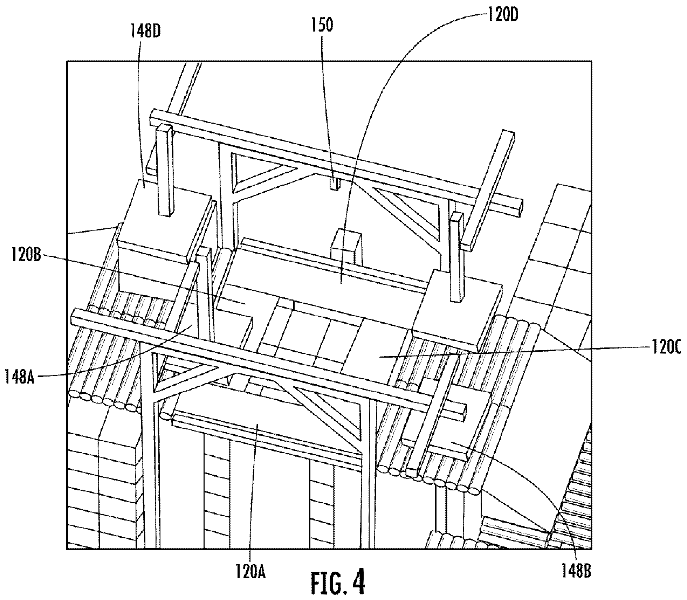

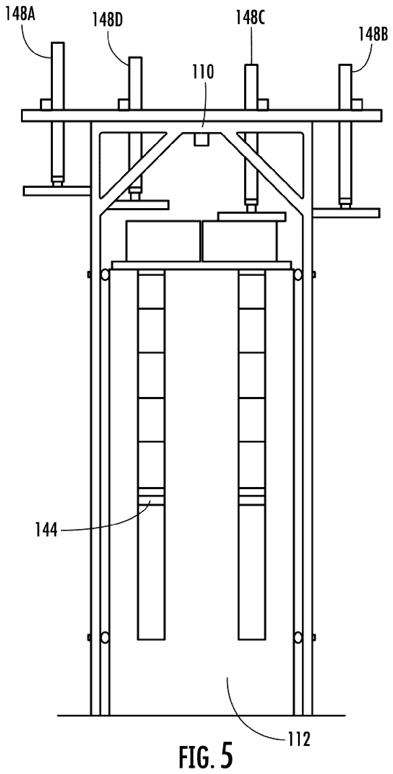

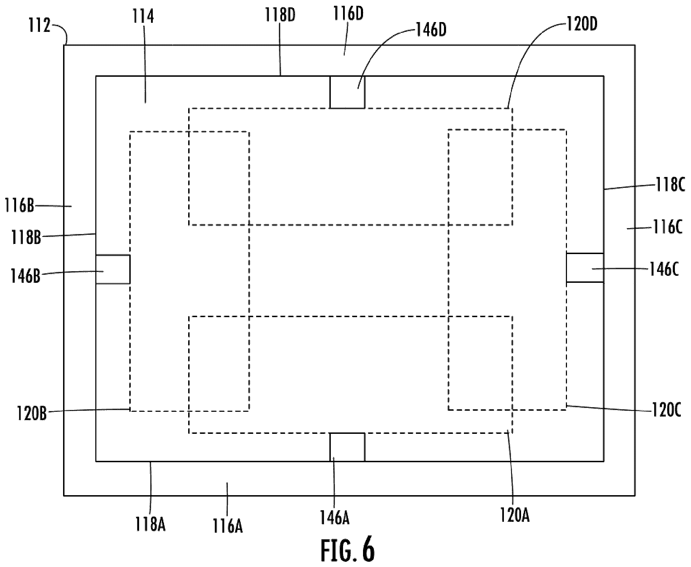

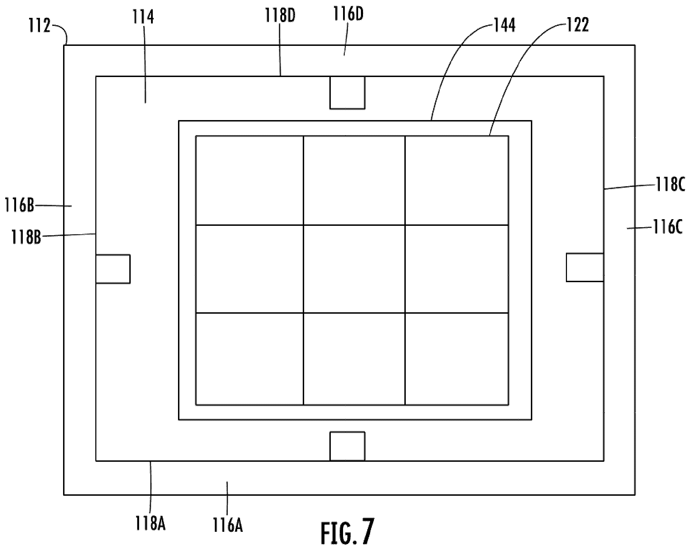

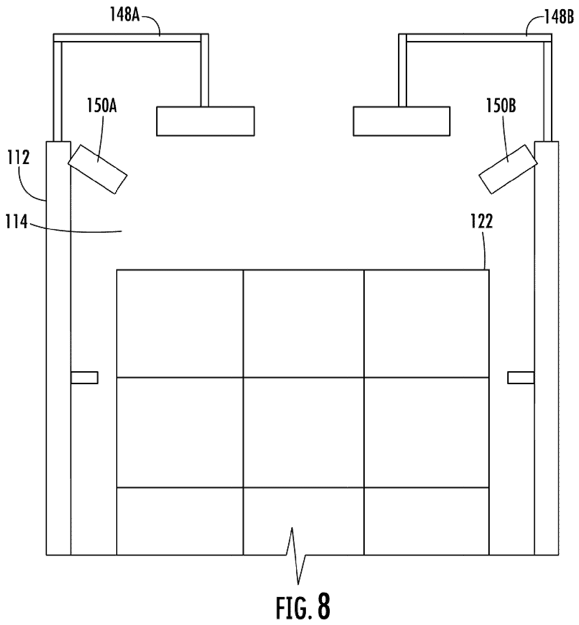

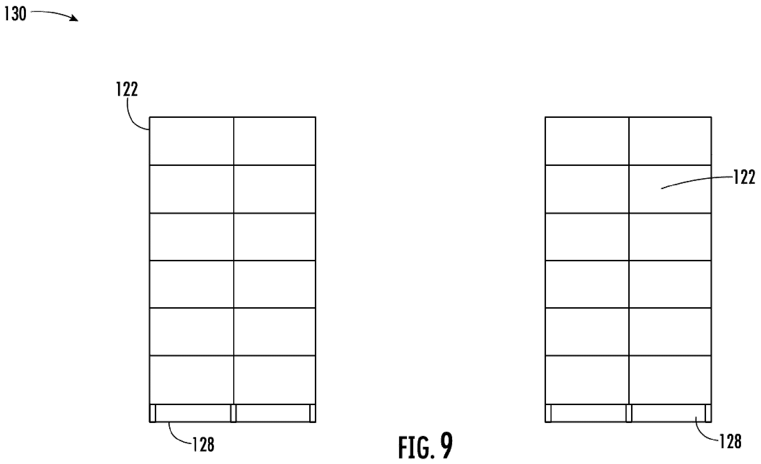

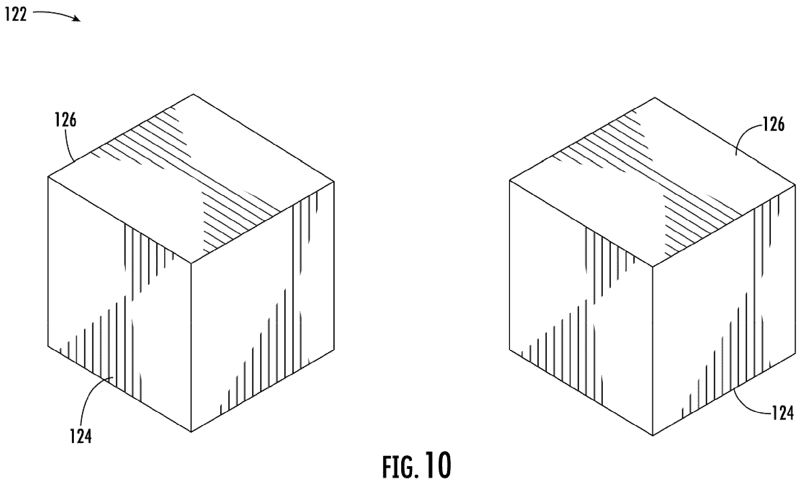

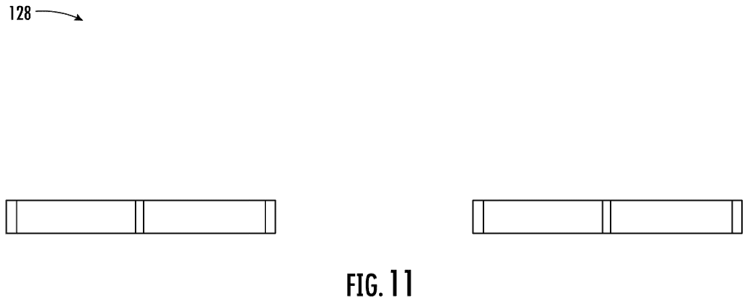

With reference to FIGS. 1-11, an environment 100 in which embodiments of the disclosure may operate is illustrated. In some embodiments, the environment 100 may be a warehouse, distribution center, storage area, and/or the like. In some embodiments, the environment 100 includes a system 102. In some embodiments, the system 102 is configured to facilitate loading and/or unloading objects.

In some embodiments, the system 102 includes an apparatus 110. In some embodiments, the apparatus 110 is configured to process one or more units 130. In this regard, in some embodiments, the apparatus 110 is configured to unload objects from a unit (e.g., depalletize a pallet in a unit). Additionally, or alternatively, the apparatus 110 is configured to process one or more objects 122. In this regard, in some embodiments, the apparatus 110 is configured to load objects onto a unit.

In some embodiments, the environment 100 includes one or more objects 122. In some embodiments, the one or more objects 122 include any object that may be transported by a pallet, supported by a pallet, and/or placed on a pallet. For example, the one or more objects 122 may include containers, packages, boxes, and/or the like. In some embodiments, one or more of the one or more objects 122 include one or more bottom edges 124. For example, an object in the one or more objects 122 may include four bottom edges (e.g., when the object is rectangular in shape). In some embodiments, one or more of the one or more objects 122 include one or more top edges 126. For example, an object in the one or more objects 122 may include four top edges (e.g., when the object is rectangular in shape).

In some embodiments, the environment 100 includes one or more pallets 128. In some embodiments, each of the one or more pallets 128 are a structure that is configured to support, transport, and/or the like one or more of the one or more objects 122.

In some embodiments, the environment 100 incudes one or more units 130. In some embodiments, a unit includes a pallet and one or more objects. For example, a unit may include a pallet upon which a plurality of objects is stacked on. Said differently, for example, a unit may be a pallet that is supporting at least one object (e.g., a loaded pallet).

In some embodiments, the one or more units 130 include a rejected unit 130A. In some embodiments, the rejected unit 130A is a unit of the one or more units 130 that is rejected by the apparatus 110 and/or the system 102. In some embodiments, the apparatus 110 is configured to reject a unit when the apparatus 110 is unable to unload objects from the unit safely (e.g., without exceeding a risk threshold) and/or efficiently (without exceed an unloading time limit). Additionally, or alternatively, the apparatus 110 is configured to reject a unit when the apparatus 110 is unable to load objects onto the unit safely (e.g., without exceeding a risk threshold) and/or efficiently (without exceeding a loading time limit).

In some embodiments, the environment 100 includes a mobile transport unit 132. In some embodiments, the mobile transport unit 132 is any mobile unit configured to transport objects, pallets, and/or units (e.g., a forklift). For example, the mobile transport unit 132 may be configured to transport the one or more units 130 between the system 102 and/or one or more other locations in the environment 100. As another example, the mobile transport unit 132 is configured to transport the one or more pallets 128 between the system 102 and/or one or more other locations in the environment 100. As another example, the mobile transport unit 132 is configured to transport the one or more objects 122 between the system 102 and/or one or more other locations in the environment 100.

In some embodiments, the apparatus 110 includes a support structure 112. In some embodiments, the support structure is a structure that is configured to support other structures, objects, apparatuses, units, devices, and/or the like. In some embodiments, the support structure 112 comprises any material capable of supporting other structures, objects, apparatuses, units, devices, and/or the like. For example, the support structure 112 may comprise metal, wood, plastic, a combination thereof, and/or the like.

In some embodiments, the support structure includes one or more sides 116. In some embodiments, the one or more sides 116 include four sides. For example, the one or more sides 116 may include a first side 116A, a second side 116B, a third side 116C, and/or a fourth side 116D.

In some embodiments, the support structure 112 includes an interior area 114. In some embodiments, the interior area 114 is an area in which a unit is loaded and/or a unit is unloaded. In some embodiments, the support structure 112 includes one or more interior surfaces 118. In some embodiments, each of the one or more interior surfaces 118 is a surface in the interior area 114 of the support structure 112. In some embodiments, the one or more interior surfaces 118 include four interior surfaces. For example, the one or more interior surfaces 118 may include a first interior surface 118A, a second interior surface 118B, a third interior surface 118C, and/or a fourth interior surface 118D.

In some embodiments, each of the one or more interior surfaces 118 corresponds to one of the one or more sides 116. For example, the first interior surface 118A may correspond to the first side 116A (e.g., the first interior surface 118A is a surface of the first side 116A). As another example, the second interior surface 118B may correspond to the second side 116B (e.g., the second interior surface 118B is a surface of the second side 116B).As another example, the third interior surface 118C may correspond to the third side 116C (e.g., the third interior surface 118C is a surface of the third side 116C). As another example, the fourth interior surface 118D may correspond to the fourth side 116D (e.g., the fourth interior surface 118D is a surface of the fourth side 116D).

In some embodiments, the interior area 114 includes one or more interior area portions 120. In some embodiments, each of the one or more interior area portions 120 corresponds to a portion of the interior area 114. In some embodiments, each of the one or more interior area portions 120 corresponds to one of the one or more sides 116. For example, the first interior area portion 120A may correspond to the first side 116A (e.g., the first interior area portion 120A is proximate the first side 116A). As another example, the second interior area portion 120B may correspond to the second side 116B (e.g., the second interior area portion 120B is proximate the second side 116B). As another example, the third interior area portion 120C may correspond to the third side 116C (e.g., the third interior area portion 120C is proximate the third side 116C). As another example, the fourth interior area portion 120D may correspond to the fourth side 116D (e.g., the fourth interior area portion 120D is proximate the fourth side 116D). In some embodiments, one or more of the one or more interior area portions 120 at least partially overlaps with another of the one or more interior area portions 120. Additionally, or alternatively, one or more of the one or more interior area portions 120 does not overlap with another of the one or more interior area portions 120 (e.g., each interior area portion may correspond to an exclusive portion of the interior area 114 that is not include in any other interior area portions of the one or more interior area portions 120).

In some embodiments, the system 102 includes an object conveyor 134. In some embodiments, the object conveyor includes a first object conveyor portion 134A and/or a second object conveyor portion 134B. In some embodiments, the object conveyor 134 is coupled to the apparatus 110. For example, the first object conveyor portion 134A may be coupled to the second side 116B of the support structure 112. As another example, the second object conveyor portion 134B may be coupled to the third side 116C of the support structure 112.

In some embodiments, the object conveyor 134 is configured to transport one or more of the one or more objects 122 between the apparatus 110 and one or more locations in proximity to the system 102. For example, the object conveyor 134 may be configured to transport one or more of the one or more objects 122 between the apparatus 110 and an object storage area, a vehicle (e.g., a distribution vehicle), an object inspection area (e.g., a quality control area where objects are inspected), and/or the like.

In some embodiments, the system 102 includes a pallet collection unit 138. In some embodiments, the pallet collection unit 138 includes a collection of pallets of the one or more pallets 128. In some embodiments, the pallet collection unit 138 includes a collection of pallets from which objects have been unloaded. Additionally, or alternatively, the pallet collection unit 138 includes a collection of pallets for which objects are to be loaded onto. In some embodiments, the mobile transport unit 132 is configured to collect pallets from the pallet collection unit 138 and transport the pallets to another location in the environment 100. In some embodiments, the pallet collection unit 138 is coupled to a unit conveyor 136.

In some embodiments, the system 102 is associated with and/or includes a first zone 140. In some embodiments, the first zone 140 is an area in which one or more of the one or more units 130 are provided to the system 102. For example, the first zone 140 may include an area in which one or more of the one or more units 130 are loaded into the system 102 (e.g., to be unloaded by the apparatus 110) by the mobile transport unit 132. Additionally, or alternatively, in some embodiments, the first zone 140 includes an area in which one or more of the one or more units 130 are removed from the system 102. For example, the first zone 140 may include an area in which one or more of the one or more units 130 are removed into the system 102 (e.g., after being loaded by the apparatus 110) by the mobile transport unit 132.

In some embodiments, the system 102 is associated with and/or includes a second zone 142. In some embodiments, the second zone 142 includes an area in which the rejected unit 130A is removed from the system 102. For example, the second zone 142 may include an area in which the rejected unit 130A is removed from the system by the mobile transport unit 132 after being rejected by the apparatus 110 and/or the system 102.

In some embodiments, the system 102 includes a unit conveyor 136. In some embodiments, the unit conveyor includes a first unit conveyor portion 136A and/or a second unit conveyor portion 136B. In some embodiments, the unit conveyor 136 is coupled to the apparatus 110. For example, the first unit conveyor portion 136A may be coupled to the second side 116B of the support structure 112 and/or the second unit conveyor portion 136B may be coupled to the third side 116C of the support structure 112.

In some embodiments, the first unit conveyor portion 136A is configured to move a unit of the one or more units 130 between the first zone 140 and the apparatus 110. In some embodiments, the second unit conveyor portion 136B is configured to move the rejected unit 130A between the apparatus 110 and the second zone 142. In some embodiments, the second unit conveyor portion 136B is configured to move a pallet of the one or more pallets 128 between the apparatus 110 and the pallet collection unit 138.

In some embodiments, the apparatus 110 includes a transport apparatus 144. In some embodiments, the transport apparatus 144 is coupled to the support structure 112. In some embodiments, the transport apparatus 144 is coupled to the support structure 112 such that at least a portion of the transport apparatus 144 is located in the interior area 114 of the support structure 112. In some embodiments, the transport apparatus 144 is configured to move one or more of the one or more units 130 through the interior area 114. For example, the transport apparatus 144 may be configured to move a unit between a position in the interior area 114 proximate the unit conveyor 136 and a position in the interior area 114 proximate the object conveyor 134.

In some embodiments, the apparatus includes a plurality of sensors 146. In some embodiments, the plurality of sensors 146 includes four sensors. In some embodiments, the plurality of sensors 146 includes a sensor corresponding to each side in the one or more sides 116. In this regard, for example, a first sensor 146A in the plurality of sensors 146 is disposed on the first interior surface 118A. As another example, a second sensor 146B in the plurality of sensors 146 is disposed on the second interior surface 118B. As another example, a third sensor 146C in the plurality of sensors 146 is disposed on the third interior surface 118C. As another example, a fourth sensor 146D in the plurality of sensors 146 is disposed on the fourth interior surface 118D.

In some embodiments, each of the plurality of sensors 146 is configured to monitor at least a portion of the interior area 114. In some embodiments, each of the plurality of sensors 146 is configured to monitor a corresponding portion of the interior area. For example, the first sensor 146A is configured to monitor the first interior area portion 120A proximate the first interior surface 118A. As another example, the second sensor 146B is configured to monitor the second interior area portion 120B proximate the second interior surface 118B. As another example, the third sensor 146C is configured to monitor the third interior area portion 120C proximate the third interior surface 118C. As another example, the fourth sensor 146D is configured to monitor the fourth interior area portion 120D proximate the fourth interior surface 118D. Said differently, for example, each of the plurality of sensors may be configured to monitor a quarter and/or a quadrant of the interior area 114.

In some embodiments, each of the plurality of sensors 146 is configured to detect when a bottom edge of an object in the one or more objects 122 is in line with the object conveyor 134. In some embodiments, each of the plurality of sensors 146 is configured to monitor its corresponding interior area portion to detect when a bottom edge of an object is in line with the object conveyor 134. For example, the first sensor 146A is configured to detect when a bottom edge of an object in the first interior area portion 120A is in line with the object conveyor 134. As another example, the second sensor 146B is configured to detect when a bottom edge of an object in the second interior area portion 120B is in line with the object conveyor 134.As another example, the third sensor 146C is configured to detect when a bottom edge of an object in the third interior area portion 120C is in line with the object conveyor 134. As another example, the fourth sensor 146D is configured to detect when a bottom edge of an object in the fourth interior area portion 120D is in line with the object conveyor 134.

In some embodiments, each of the plurality of sensors 146 is configured to detect when a top edge of an object in the one or more objects 122 is in line with an object conveyor 134. In some embodiments, each of the plurality of sensors 146 is configured to monitor its corresponding interior area portion to detect when a top edge of an object is in line with the object conveyor 134. For example, the first sensor 146A is configured to detect when a top edge of an object in the first interior area portion 120A is in line with the object conveyor 134. As another example, the second sensor 146B is configured to detect when a top edge of an object in the second interior area portion 120B is in line with the object conveyor 134.As another example, the third sensor 146C is configured to detect when a top edge of an object in the third interior area portion 120C is in line with the object conveyor 134. As another example, the fourth sensor 146D is configured to detect when a top edge of an object in the fourth interior area portion 120D is in line with the object conveyor 134.

In some embodiments, the plurality of sensors 146 includes one or more of a camera, an imaging device, a vision device, a laser type edge detection device, and/or any other device capable of performing edge detection. In this regard, in some embodiments, one or more of the plurality of sensors 146 are configured to perform one or more image processing techniques to detect when a bottom edge of an object in the one or more objects 122 is in line with the object conveyor 134. Additionally, or alternatively, one or more of the plurality of sensors 146 are configured to perform one or more image processing techniques to detect when a top edge of an object in the one or more objects 122 is in line with the object conveyor 134.

In some embodiments, the apparatus 110 includes one or more manipulators 148. In some embodiments, the one or more manipulators 148 includes four manipulators. For example, the one or more manipulators 148 may include a first manipulator 148A, a second manipulator 148B, a third manipulator 148C, and/or a fourth manipulator 148D.

In some embodiments, each of the one or more manipulators 148 is configured to perform a first pick and place operation. In some embodiments, a first pick and place operation is an operation performed by a manipulator to facilitate unloading objects from a unit in the one or more units (e.g., facilitate depalletizing a pallet in a unit).

In some embodiments, one or more of the one or more manipulators 148 are configured to perform a first pick and place operation when a bottom edge of an object is in line with the object conveyor 134. In this regard, in some embodiments, by performing a first pick and place operation when a bottom edge of an object is in line with the object conveyor 134, the amount of distance that a manipulator has to travel to perform a first pick and place operation is minimized. Said differently, for example, by performing a first pick and place operation when a bottom edge of an object is in line with the object conveyor 134, a manipulator is able to perform the first pick and place operation using horizontal movements and has to perform no vertical movements or minimal vertical movements.

In some embodiments, the one or more manipulators 148 include one or more mechanisms for facilitating performance of a first pick and place operation. In some embodiments, the one or more mechanisms are configured to grasp and/or hold an object. For example, the one or more mechanisms may include a suction apparatus (e.g., suction cups), a claw apparatus, a gripper apparatus, and/or the like configured to grasp and/or hold an object to perform the first pick and place operation.

In some embodiments, a first pick and place operation includes one or more of the one or more manipulators 148 being configured to pick an object. For example, the first manipulator 148A may be configured to pick an object. In some embodiments, one or more of the one or more manipulators 148 are configured to pick an object from a unit when performing a first pick and place operation. In some embodiments two or more of the one or more manipulators 148 may be configured to pick an object when performing a first pick and place operation. For example, the first manipulator 148A and the second manipulator 148B may be configured to pick an object (e.g., a single object) when performing a first pick and place operation. Said differently, in some embodiments, two or more of the manipulators are configured to work together to pick a single object (e.g., when the object is large and difficult to handle using only one manipulator). In some embodiments, the one or more manipulators 148 are configured to pick an object at a pick point on the object.

In some embodiments, a first pick and place operation includes one or more of the one or more manipulators 148 being configured to transport an object (e.g., a picked object) to the object conveyor 134. In this regard, for example, the one or more manipulators 148 are configured to pick an object from a unit (e.g., a unit being unloaded) and transport the object to the object conveyor 134. In some embodiments, a first pick and place operation includes one or more of the one or more manipulators 148 being configured to place the object (e.g., a picked and transported object) on the object conveyor 134. In this regard, for example, the one or more manipulators 148 are configured to pick an object from a unit (e.g., a unit being unloaded), transport the object to the object conveyor 134, and place the object on the object conveyor 134.

In some embodiments, each of the one or more manipulators 148 is configured to perform a second pick and place operation. In some embodiments, a second pick and place operation is an operation performed by a manipulator to facilitate loading objects onto a unit in the one or more units 130. In some embodiments, one or more of the one or more manipulators 148 are configured to perform a second pick and place operation when a top edge of an object is in line with the object conveyor 134. In this regard, by performing a second pick and place operation when a top edge of an object is in line with the object conveyor 134, the amount of distance that a manipulator has to travel to perform a second pick and place operation is minimized. Said differently, for example, by performing a second pick and place operation when a top edge of an object is in line with the object conveyor 134, a manipulator is able to perform the second pick and place operation using horizontal movements and has to perform no vertical movements or minimal vertical movements.

In some embodiments, the one or more manipulators 148 include one or more mechanisms for facilitating performance of a second pick and place operation. In some embodiments, the one or more mechanisms are configured to grasp and/or hold an object. For example, the one or more mechanisms may include a suction apparatus (e.g., suction cups), a claw apparatus, a gripper apparatus, and/or the like configured to grasp and/or hold an object when performing the second pick and place operation.

In some embodiments, a second pick and place operation includes one or more of the one or more manipulators 148 being configured to pick an object. For example, the first manipulator 148A may be configured to pick an object. In some embodiments, one or more of the one or more manipulators 148 are configured to pick an object from the object conveyor 134 when performing a second pick and place operation. In some embodiments two or more of the one or more manipulators 148 may be configured to pick an object when performing a second pick and place operation. For example, the first manipulator 148A and the second manipulator 148B may be configured to pick an object when performing a second pick and place operation. Said differently, in some embodiments, two or more of the manipulators are configured to work together to pick a single object (e.g., when the object is large). In some embodiments, the one or more manipulators 148 are configured to pick an object at a pick point on the object when performing a second pick and place operation.

In some embodiments, a second pick and place operation includes one or more of the one or more manipulators 148 being configured to transport an object (e.g., a picked object) to a unit (e.g., a unit in the interior area 114 being loaded by the apparatus 110). In this regard, for example, the one or more manipulators 148 are configured to pick an object from the object conveyor and transport the object to a unit (e.g., a unit being loaded). In some embodiments, a second pick and place operation includes one or more of the one or more manipulators 148 being configured to place the object (e.g., a picked and transported object) on a unit. In this regard, for example, the one or more manipulators 148 are configured to pick an object from the object conveyor 134, transport the object to a unit, and place the object on the unit.

In some embodiments, the apparatus 110 includes one or more cameras 150. For example, the one or more cameras 150 may include two cameras. In some embodiments, one or more of the one or more cameras 150 are configured to identify a pick point on an object. In some embodiments, a pick point is a position, point, and/or area on an object at which the one or more manipulators 148 may contact an object to perform a first pick and place operation and/or a second pick and place operation. In some embodiments, the one or more cameras 150 are configured to perform one or more image processing techniques to identify a pick point on an object.

In some embodiments, the one or more cameras 150 are disposed on the support structure 112. In some embodiments, a first camera 150A in the one or more cameras 150 is disposed on the first side 116A. In some embodiments, a second camera 150B in the one or more cameras 150 is disposed on the fourth side 116D. In some embodiments, the one or more cameras 150 may be depth cameras (e.g., top depth cameras).

In some embodiments, the one or more cameras are positioned above the object conveyor 134. In some embodiments, the one or more cameras 150 are positioned at a fixed height above the object conveyor 134. In this regard, for example, the one or more cameras 150 may be a fixed distance away from each object in a plurality of objects in a unit when each object is being unloaded from a unit. Said differently, for example, because each object is unloaded from a unit when each object's bottom edge is in line with the object conveyor 134, the capability of the one or more cameras 150 to identify pick points on objects is not impacted by where an object is located in a unit. For example, the one or more cameras 150 are the same distance from a first object located at the top of a unit when the first object is being unloaded and a second object located at the bottom of a unit when the second object is being unloaded. Additionally, or alternatively, the one or more cameras 150 may be a fixed distance away from each object in a plurality of objects in a unit when each object is being loaded onto a unit. Said differently, for example, because each object is loaded onto a unit when a previous object's top edge is in line with the object conveyor 134, the capability of the one or more cameras 150 to identify pick points on objects is not impacted by where an object is located in a unit. For example, the one or more cameras 150 are the same distance from a first object located at the top of a unit when the first object is being loaded (e.g., placed onto the unit) and a second object located at the bottom of a unit when the second object is being loaded (e.g., placed onto a unit). As a result, the one or more cameras 150 are positioned such that the one or more cameras 150 is able to identify pick points at a consistent accuracy.

In some embodiments, the system 102 includes a controller 152. In some embodiments, the controller 152 may be located in proximity to the apparatus 110. For example, the controller 152 may be disposed on the support structure 112. Additionally, or alternatively, is some embodiments, the controller 152 is located remotely from the apparatus 110 and/or other components of the system 102. For example, the controller 152 may be a remote computing device (e.g., a cloud device).

In some embodiments, the controller 152 is configured to control one or more operations of the system 102 and/or determine one or more conditions associated with the system 102. For example, the controller 152 may be configured to transmit an instruction to one or more of the one or more manipulators 148 to perform a first pick and place operation when the bottom edge of an object is in line with the object conveyor 134. As another example, the controller 152 may be configured to transmit an instruction to one or more of the one or more manipulators 148 to perform a second pick and place operation when the top edge of an object is in line with the object conveyor 134.

As another example, the controller 152 may be configured to determine that a bottom edge of an object is in line with the object conveyor 134 (e.g., using the plurality of sensors 146) . As another example, the controller 152 may be configured to determine that a top edge of an object is in line with the object conveyor 134 (e.g., using the plurality of sensors 146). In this regard, for example, the controller 152 may be configured to perform one or more image processing techniques. As another example, the controller 152 may be configured to determine that a unit in the one or more units 130 should be rejected and transmit an instruction to the transport apparatus 144 and/or the second unit conveyor portion 136B to move the rejected unit (e.g., rejected unit 130A) to the second zone 142. As another example, the controller 152 may be configured to determine a pick place on an object.

### Example Methods

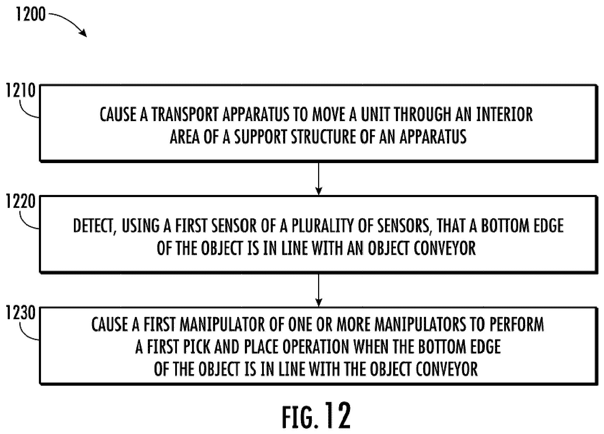

Referring now to FIG. 12, a flowchart providing an example method 1200. In this regard, FIG. 12 illustrates operations that may be performed by the system 102 and/or components of the system 102.

As shown in block 1210, the method 1200 includes causing a transport apparatus to move a unit through an interior area of a support structure of an apparatus. As described above, in some embodiments, the interior area is an area in which a unit is loaded and/or a unit is unloaded. In some embodiments, the support structure includes one or more interior surfaces. In some embodiments, each of the one or more interior surfaces is a surface in the interior area of the support structure. In some embodiments, the one or more interior surfaces include four interior surfaces. For example, the one or more interior surfaces may include a first interior surface, a second interior surface, a third interior surface, and/or a fourth interior surface.

In some embodiments, each of the one or more interior surfaces corresponds to one of the one or more sides. For example, the first interior surface may correspond to the first side (e.g., the first interior surface is a surface of the first side). As another example, the second interior surface may correspond to the second side (e.g., the second interior surface is a surface of the second side). As another example, the third interior surface may correspond to the third side (e.g., the third interior surface is a surface of the third side). As another example, the fourth interior surface may correspond to the fourth side (e.g., the fourth interior surface is a surface of the fourth side).

In some embodiments, the interior area includes one or more interior area portions. In some embodiments, each of the one or more interior area portions corresponds to a portion of the interior area. In some embodiments, each of the one or more interior area portions corresponds to one of the one or more sides. For example, the first interior area portion may correspond to the first side (e.g., the first interior area portion is proximate the first side). As another example, the second interior area portion may correspond to the second side (e.g., the second interior area portion is proximate the second side).As another example, the third interior area portion may correspond to the third side (e.g., the third interior area portion is proximate the third side). As another example, the fourth interior area portion may correspond to the fourth side (e.g., the fourth interior area portion is proximate the fourth side). In some embodiments, one or more of the one or more interior area portions at least partially overlaps with another of the one or more interior area portions. Additionally, or alternatively, one or more of the one or more interior area portions does not overlap with another of the one or more interior area portions (e.g., each interior area portion may correspond to an exclusive portion of the interior area that is not include in any other interior area portions of the one or more interior area portions).

In some embodiments, the apparatus includes a transport apparatus. In some embodiments, the transport apparatus is coupled to the support structure. In some embodiments, the transport apparatus is coupled to the support structure such that at least a portion of the transport apparatus is located in the interior area of the support structure. In some embodiments, the transport apparatus is configured to move one or more of the one or more units through the interior area. For example, the transport apparatus may be configured to move a unit between a position in the interior area proximate the unit conveyor and a position in the interior area proximate the object conveyor.

As shown in block 1220, the method 1200 includes detecting, using a first sensor of a plurality of sensors, that a bottom edge of the object is in line with an object conveyor. As described above, in some embodiments, the apparatus includes a plurality of sensors. In some embodiments, the plurality of sensors includes four sensors. In some embodiments, the plurality of sensors includes a sensor corresponding to each side in the one or more sides. In this regard, for example, a first sensor in the plurality of sensors is disposed on the first interior surface. As another example, a second sensor in the plurality of sensors is disposed on the second interior surface. As another example, a third sensor in the plurality of sensors is disposed on the third interior surface. As another example, a fourth sensor in the plurality of sensors is disposed on the fourth interior surface.

In some embodiments, each of the plurality of sensors is configured to monitor at least a portion of the interior area. In some embodiments, each of the plurality of sensors is configured to monitor a corresponding portion of the interior area. For example, the first sensor is configured to monitor the first interior area portion proximate the first interior surface. As another example, the second sensor is configured to monitor the second interior area portion proximate the second interior surface. As another example, the third sensor is configured to monitor the third interior area portion proximate the third interior surface. As another example, the fourth sensor is configured to monitor the fourth interior area portion proximate the fourth interior surface. Said differently, for example, each of the plurality of sensors may be configured to monitor a quarter and/or a quadrant of the interior area.

In some embodiments, each of the plurality of sensors is configured to detect when a bottom edge of an object in the one or more objects is in line with the object conveyor. In some embodiments, each of the plurality of sensors is configured to monitor its corresponding interior area portion to detect when a bottom edge of an object is in line with the object conveyor. For example, the first sensor is configured to detect when a bottom edge of an object in the first interior area portion is in line with the object conveyor. As another example, the second sensor is configured to detect when a bottom edge of an object in the second interior area portion is in line with the object conveyor. As another example, the third sensor is configured to detect when a bottom edge of an object in the third interior area portion is in line with the object conveyor. As another example, the fourth sensor is configured to detect when a bottom edge of an object in the fourth interior area portion is in line with the object conveyor.

In some embodiments, the plurality of sensors includes one or more of a camera, an imaging device, a vision device, a laser type edge detection device, and/or any other device capable of performing edge detection. In this regard, in some embodiments, one or more of the plurality of sensors are configured to perform one or more image processing techniques to detect when a bottom edge of an object in the one or more objects is in line with the object conveyor. Additionally, or alternatively, one or more of the plurality of sensors are configured to perform one or more image processing techniques to detect when a top edge of an object in the one or more objects is in line with the object conveyor.

As shown in block 1230, the method 1200 includes causing a first manipulator of one or more manipulators to perform a first pick and place operation when the bottom edge of the object is in line with the object conveyor. As described above, in some embodiments, , the one or more manipulators includes four manipulators. For example, the one or more manipulators may include a first manipulator, a second manipulator, a third manipulator, and/or a fourth manipulator.

In some embodiments, each of the one or more manipulators is configured to perform a first pick and place operation. In some embodiments, a first pick and place operation is an operation performed by a manipulator to facilitate unloading objects from a unit in the one or more units (e.g., facilitate depalletizing a pallet in a unit).

In some embodiments, one or more of the one or more manipulators are configured to perform a first pick and place operation when a bottom edge of an object is in line with the object conveyor. In this regard, in some embodiments, by performing a first pick and place operation when a bottom edge of an object is in line with the object conveyor, the amount of distance that a manipulator has to travel to perform a first pick and place operation is minimized. Said differently, for example, by performing a first pick and place operation when a bottom edge of an object is in line with the object conveyor, a manipulator is able to perform the first pick and place operation using horizontal movements and has to perform no vertical movements or minimal vertical movements.

In some embodiments, the one or more manipulators include one or more mechanisms for facilitating performance of a first pick and place operation. In some embodiments, the one or more mechanisms are configured to grasp and/or hold an object. For example, the one or more mechanisms may include a suction apparatus (e.g., suction cups), a claw apparatus, a gripper apparatus, and/or the like configured to grasp and/or hold an object to perform the first pick and place operation.

In some embodiments, a first pick and place operation includes one or more of the one or more manipulators being configured to pick an object. For example, the first manipulator may be configured to pick an object. In some embodiments, one or more of the one or more manipulators are configured to pick an object from a unit when performing a first pick and place operation. In some embodiments two or more of the one or more manipulators may be configured to pick an object when performing a first pick and place operation. For example, the first manipulator and the second manipulator may be configured to pick an object (e.g., a single object) when performing a first pick and place operation. Said differently, in some embodiments, two or more of the manipulators are configured to work together to pick a single object (e.g., when the object is large and difficult to handle using only one manipulator). In some embodiments, the one or more manipulators are configured to pick an object at a pick point on the object.

In some embodiments, a first pick and place operation includes one or more of the one or more manipulators being configured to transport an object (e.g., a picked object) to the object conveyor. In this regard, for example, the one or more manipulators are configured to pick an object from a unit (e.g., a unit being unloaded) and transport the object to the object conveyor. In some embodiments, a first pick and place operation includes one or more of the one or more manipulators being configured to place the object (e.g., a picked and transported object) on the object conveyor. In this regard, for example, the one or more manipulators are configured to pick an object from a unit (e.g., a unit being unloaded), transport the object to the object conveyor, and place the object on the object conveyor.

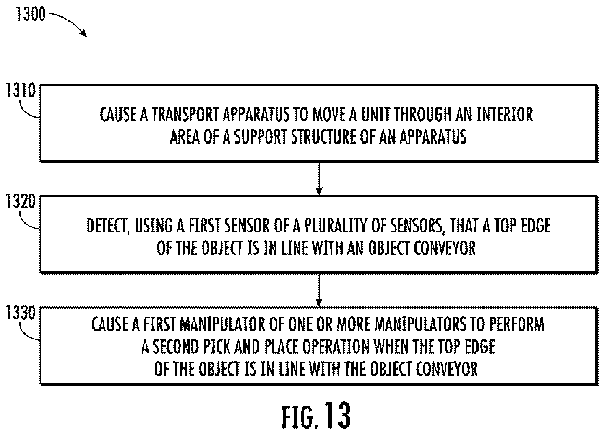

Referring now to FIG. 13, a flowchart providing an example method 1300. In this regard, FIG. 13 illustrates operations that may be performed by the system 102 and/or components of the system 102.

As shown in block 1310, the method 1300 includes causing a transport apparatus to move a unit through an interior area of a support structure of an apparatus. As described above, in some embodiments, the interior area is an area in which a unit is loaded and/or a unit is unloaded. In some embodiments, the support structure includes one or more interior surfaces. In some embodiments, each of the one or more interior surfaces is a surface in the interior area of the support structure. In some embodiments, the one or more interior surfaces include four interior surfaces. For example, the one or more interior surfaces may include a first interior surface, a second interior surface, a third interior surface, and/or a fourth interior surface.

In some embodiments, each of the one or more interior surfaces corresponds to one of the one or more sides. For example, the first interior surface may correspond to the first side (e.g., the first interior surface is a surface of the first side). As another example, the second interior surface may correspond to the second side (e.g., the second interior surface is a surface of the second side).As another example, the third interior surface may correspond to the third side (e.g., the third interior surface is a surface of the third side). As another example, the fourth interior surface may correspond to the fourth side (e.g., the fourth interior surface is a surface of the fourth side).

In some embodiments, the interior area includes one or more interior area portions. In some embodiments, each of the one or more interior area portions corresponds to a portion of the interior area. In some embodiments, each of the one or more interior area portions corresponds to one of the one or more sides. For example, the first interior area portion may correspond to the first side (e.g., the first interior area portion is proximate the first side). As another example, the second interior area portion may correspond to the second side (e.g., the second interior area portion is proximate the second side).As another example, the third interior area portion may correspond to the third side (e.g., the third interior area portion is proximate the third side). As another example, the fourth interior area portion may correspond to the fourth side (e.g., the fourth interior area portion is proximate the fourth side). In some embodiments, one or more of the one or more interior area portions at least partially overlaps with another of the one or more interior area portions. Additionally, or alternatively, one or more of the one or more interior area portions does not overlap with another of the one or more interior area portions (e.g., each interior area portion may correspond to an exclusive portion of the interior area that is not include in any other interior area portions of the one or more interior area portions).

In some embodiments, the apparatus includes a transport apparatus. In some embodiments, the transport apparatus is coupled to the support structure. In some embodiments, the transport apparatus is coupled to the support structure such that at least a portion of the transport apparatus is located in the interior area of the support structure. In some embodiments, the transport apparatus is configured to move one or more of the one or more units through the interior area. For example, the transport apparatus may be configured to move a unit between a position in the interior area proximate the unit conveyor and a position in the interior area proximate the object conveyor.

As shown in block 1320, the method 1300 includes detecting, using a first sensor of a plurality of sensors, that a top edge of the object is in line with an object conveyor. As described above, in some embodiments, the plurality of sensors includes four sensors. In some embodiments, the plurality of sensors includes a sensor corresponding to each side in the one or more sides. In this regard, for example, a first sensor in the plurality of sensors is disposed on the first interior surface. As another example, a second sensor in the plurality of sensors is disposed on the second interior surface. As another example, a third sensor in the plurality of sensors is disposed on the third interior surface. As another example, a fourth sensor in the plurality of sensors is disposed on the fourth interior surface.

In some embodiments, each of the plurality of sensors is configured to monitor at least a portion of the interior area. In some embodiments, each of the plurality of sensors is configured to monitor a corresponding portion of the interior area. For example, the first sensor is configured to monitor the first interior area portion proximate the first interior surface. As another example, the second sensor is configured to monitor the second interior area portion proximate the second interior surface. As another example, the third sensor is configured to monitor the third interior area portion proximate the third interior surface. As another example, the fourth sensor is configured to monitor the fourth interior area portion proximate the fourth interior surface. Said differently, for example, each of the plurality of sensors may be configured to monitor a quarter and/or a quadrant of the interior area.

In some embodiments, each of the plurality of sensors is configured to detect when a top edge of an object in the one or more objects is in line with an object conveyor. In some embodiments, each of the plurality of sensors is configured to monitor its corresponding interior area portion to detect when a top edge of an object is in line with the object conveyor. For example, the first sensor is configured to detect when a top edge of an object in the first interior area portion is in line with the object conveyor. As another example, the second sensor is configured to detect when a top edge of an object in the second interior area portion is in line with the object conveyor. As another example, the third sensor is configured to detect when a top edge of an object in the third interior area portion is in line with the object conveyor. As another example, the fourth sensor is configured to detect when a top edge of an object in the fourth interior area portion is in line with the object conveyor.

In some embodiments, the plurality of sensors includes one or more of a camera, an imaging device, a vision device, a laser type edge detection device, and/or any other device capable of performing edge detection. In this regard, in some embodiments, one or more of the plurality of sensors are configured to perform one or more image processing techniques to detect when a bottom edge of an object in the one or more objects is in line with the object conveyor. Additionally, or alternatively, one or more of the plurality of sensors are configured to perform one or more image processing techniques to detect when a top edge of an object in the one or more objects is in line with the object conveyor.

As shown in block 1330, the method 1300 includes causing a first manipulator of one or more manipulators to perform a second pick and place operation when the top edge of the object is in line with the object conveyor. As described above, in some embodiments, , the one or more manipulators includes four manipulators. For example, the one or more manipulators may include a first manipulator, a second manipulator, a third manipulator, and/or a fourth manipulator.

In some embodiments, each of the one or more manipulators is configured to perform a second pick and place operation. In some embodiments, a second pick and place operation is an operation performed by a manipulator to facilitate loading objects onto a unit in the one or more units. In some embodiments, one or more of the one or more manipulators are configured to perform a second pick and place operation when a top edge of an object is in line with the object conveyor. In this regard, by performing a second pick and place operation when a top edge of an object is in line with the object conveyor, the amount of distance that a manipulator has to travel to perform a second pick and place operation is minimized. Said differently, for example, by performing a second pick and place operation when a top edge of an object is in line with the object conveyor, a manipulator is able to perform the second pick and place operation using horizontal movements and has to perform no vertical movements or minimal vertical movements.

In some embodiments, the one or more manipulators include one or more mechanisms for facilitating performance of a second pick and place operation. In some embodiments, the one or more mechanisms are configured to grasp and/or hold an object. For example, the one or more mechanisms may include a suction apparatus (e.g., suction cups), a claw apparatus, a gripper apparatus, and/or the like configured to grasp and/or hold an object when performing the second pick and place operation.

In some embodiments, a second pick and place operation includes one or more of the one or more manipulators being configured to pick an object. For example, the first manipulator may be configured to pick an object. In some embodiments, one or more of the one or more manipulators are configured to pick an object from the object conveyor when performing a second pick and place operation. In some embodiments two or more of the one or more manipulators may be configured to pick an object when performing a second pick and place operation. For example, the first manipulator and the second manipulator may be configured to pick an object when performing a second pick and place operation. Said differently, in some embodiments, two or more of the manipulators are configured to work together to pick a single object (e.g., when the object is large). In some embodiments, the one or more manipulators are configured to pick an object at a pick point on the object when performing a second pick and place operation.

In some embodiments, a second pick and place operation includes one or more of the one or more manipulators being configured to transport an object (e.g., a picked object) to a unit (e.g., a unit in the interior area being loaded by the apparatus). In this regard, for example, the one or more manipulators are configured to pick an object from the object conveyor and transport the object to a unit (e.g., a unit being loaded). In some embodiments, a second pick and place operation includes one or more of the one or more manipulators being configured to place the object (e.g., a picked and transported object) on a unit. In this regard, for example, the one or more manipulators are configured to pick an object from the object conveyor, transport the object to a unit, and place the object on the unit.

In some embodiments, the apparatus includes one or more cameras. For example, the one or more cameras may include two cameras. In some embodiments, the one or more cameras are positioned above the object conveyor. In some embodiments, the one or more cameras are disposed on the support structure. In some embodiments, a first camera in the one or more cameras is disposed on the first side. In some embodiments, a second camera in the one or more cameras is disposed on the fourth side. In some embodiments, the one or more cameras may be depth cameras (e.g., top depth cameras).

### Example Computer Processing Device

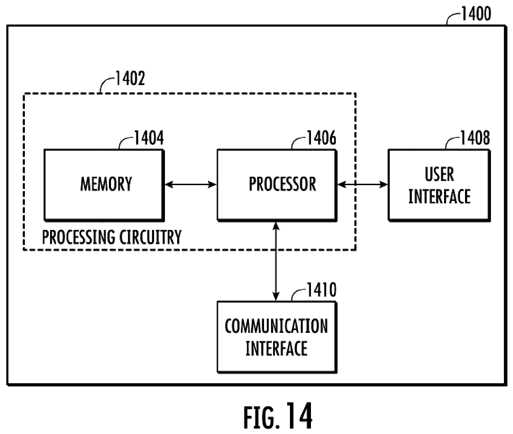

With reference to FIG 14, a block diagram of an example computer processing device 1400 is illustrated in accordance with some example embodiments. In some embodiments, the controller 152, one or more of the plurality of sensors 146, one or more of the one or more cameras 150 may be embodied as one or more computer processing devices, such as the computer processing device 1400 in FIG. 14. However, it should be noted that the components, devices, or elements illustrated in and described with respect to FIG. 14 below may not be mandatory and thus one or more may be omitted in certain embodiments. Additionally, some embodiments may include further or different components, devices or elements beyond those illustrated in and described with respect to FIG. 14.

The computer processing device 1400 may include or otherwise be in communication with processing circuitry 1402 that is configurable to perform actions in accordance with one or more embodiments disclosed herein. In this regard, the processing circuitry 1402 may be configured to perform and/or control performance of one or more functionalities of the computer processing device 1400 in accordance with various embodiments, and thus may provide means for performing functionalities of the computer processing device 1400 in accordance with various embodiments. The processing circuitry 1402 may be configured to perform data processing, application execution and/or other processing and management services according to one or more embodiments. In some embodiments, the computer processing device 1400 or a portion(s) or component(s) thereof, such as the processing circuitry 1402, may be embodied as or comprise a chip or chip set. In other words, the computer processing device 1400 or the processing circuitry 1402 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The computer processing device 1400 or the processing circuitry 1402 may therefore, in some cases, be configured to implement an embodiment of the disclosure on a single chip or as a single "system on a chip." As such, in some cases, a chip or chipset may constitute means for performing one or more operations for providing the functionalities described herein.

In some embodiments, the processing circuitry 1402 may include a processor 1406 and, in some embodiments, such as that illustrated in FIG. 14, may further include memory 1404. The processing circuitry 1402 may be in communication with or otherwise control a user interface 1408 and/or a communication interface 1410. As such, the processing circuitry 1402 may be embodied as a circuit chip (e.g., an integrated circuit chip) configured (e.g., with hardware, software or a combination of hardware and software) to perform operations described herein.

The processor 1406 may be embodied in a number of different ways. For example, the processor 1406 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. Although illustrated as a single processor, it will be appreciated that the processor 1406 may comprise a plurality of processors. The plurality of processors may be in operative communication with each other and may be collectively configured to perform one or more functionalities of the computer processing device 1400 as described herein. In some embodiments, the processor 1406 may be configured to execute instructions stored in the memory 1404 or otherwise accessible to the processor 1406. As such, whether configured by hardware or by a combination of hardware and software, the processor 1406 may represent an entity (e.g., physically embodied in circuitry - in the form of processing circuitry 1402) capable of performing operations according to embodiments of the present disclosure while configured accordingly. Thus, for example, when the processor 1406 is embodied as an ASIC, FPGA or the like, the processor 1406 may be specifically configured hardware for conducting the operations described herein. Alternatively, as another example, when the processor 1406 is embodied as an executor of software instructions, the instructions may specifically configure the processor 1406 to perform one or more operations described herein.

In some embodiments, the memory 1404 may include one or more non-transitory memory devices such as, for example, volatile and/or non-volatile memory that may be either fixed or removable. In this regard, the memory 1404 may comprise a non-transitory computer-readable storage medium. It will be appreciated that while the memory 1404 is illustrated as a single memory, the memory 1404 may comprise a plurality of memories. The memory 1404 may be configured to store information, data, applications, instructions and/or the like for enabling the computer processing device 1400 to carry out various functions in accordance with one or more embodiments. For example, the memory 1404 may be configured to buffer input data for processing by the processor 1406. Additionally, or alternatively, the memory 1404 may be configured to store instructions for execution by the processor 1406. As yet another alternative, the memory 1404 may include one or more databases that may store a variety of files, contents or data sets. Among the contents of the memory 1404, applications may be stored for execution by the processor 1406 in order to carry out the functionality associated with each respective application. In some cases, the memory 1404 may be in communication with one or more of the processor 1406, user interface 1408, and/or communication interface 1410 via a bus(es) for passing information among components of the computer processing device 1400.

The user interface 1408 may be in communication with the processing circuitry 1402 to receive an indication of a user input at the user interface 1408 and/or to provide an audible, visual, mechanical or other output to the user. As such, the user interface 1408 may include, for example, a keyboard, a mouse, a joystick, a display, a touch screen display, a microphone, a speaker, and/or other input/output mechanisms. As such, the user interface 1408 may, in some embodiments, provide means for a user to access and interact with system 102.

The communication interface 1410 may include one or more interface mechanisms for enabling communication with other devices and/or networks. In some cases, the communication interface 1410 may be any means such as a device or circuitry embodied in either hardware, or a combination of hardware and software that is configured to receive and/or transmit data from/to a network and/or any other device or module in communication with the processing circuitry 1402. By way of example, the communication interface 1410 may be configured to enable one or more of the controller 152, one or more of the plurality of sensors 146, one or more of the one or more cameras 150 to communicate with each other and/or one or more other controllers/computing devices. Accordingly, the communication interface 1410 may, for example, include an antenna (or multiple antennas) and supporting hardware and/or software for enabling communications with a wireless communication network (e.g., a wireless local area network, cellular network, global positing system network, and/or the like) and/or a communication modem or other hardware/software for supporting communication via cable, digital subscriber line (DSL), universal serial bus (USB), Ethernet or other methods.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above.

Additionally, the section headings used herein are provided for consistency with the suggestions under 37 C.F.R. 1.77 or to otherwise provide organizational cues. These headings shall not limit or characterize the invention(s) set out in any claims that may issue from this disclosure.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. A system comprising:
an apparatus comprising:
a support structure comprising an interior area;
a transport apparatus coupled to the support structure and configured to move a unit through the interior area, wherein the unit comprises an object and a pallet configured to support the object;
a plurality of sensors, wherein each of the plurality of sensors is configured to monitor a portion of the interior area, wherein a first sensor of the plurality of sensors is configured to detect that a bottom edge of the object is in line with an object conveyor; and
one or more manipulators, wherein a first manipulator of the one or more manipulators is configured to perform a first pick and place operation when the bottom edge of the object is in line with the object conveyor.

2. The system of claim 1, further comprising:
the object conveyor, wherein the object conveyor is configured to transport the object between the apparatus and one or more locations in proximity to the apparatus.

3. The system of claim **1,** further comprising:
a unit conveyor comprising a first unit conveyor portion and a second unit conveyor portion.

4. The system of claim 3, wherein the first unit conveyor portion is configured to move the unit between a first zone and the apparatus.

5. The system of claim 3, wherein the second unit conveyor portion is configured to move the pallet between the apparatus and a pallet collection unit.

6. The system of claim 3, wherein the second unit conveyor portion is configured to move a rejected unit between the apparatus and a second zone.

7. The system of claim 1, further comprising:
a controller comprising at least one processor and at least one non-transitory memory comprising a computer program code, the at least one non-transitory memory and the computer program code configured to, with the at least one processor, cause the controller to:
transmit an instruction to the first manipulator to perform the first pick and place operation when the bottom edge of the object is in line with an object conveyor.

8. The system of claim 1, wherein the support structure comprises a first side having a first interior surface, a second side having a second interior surface, a third side having a third interior surface, and a fourth side having a fourth interior surface.

9. The system of claim 8, wherein the first sensor of the plurality of sensors is disposed on the first interior surface, a second sensor of the plurality of sensors is disposed on the second interior surface, a third sensor of the plurality of sensors is disposed on the third interior surface, and a fourth sensor of the plurality of sensors is disposed on the fourth interior surface.

10. The system of claim 9, wherein the first sensor is configured to monitor a first interior area portion proximate the first interior surface, the second sensor is configured to monitor a second interior area portion proximate the second interior surface, the third sensor is configured to monitor a third interior area portion proximate the third interior surface, and the fourth sensor is configured to monitor a fourth interior area portion proximate the fourth interior surface.

11. The system of claim 1, wherein the apparatus further comprises one or more cameras configured to identify a pick point on the object, wherein the one or more cameras are positioned above the object conveyor and disposed on the support structure.

12. The system of claim 1, wherein the first pick and place operation comprises the first manipulator being configured to:
pick the object;
transport the object to the object conveyor; and
place the object on the object conveyor.

13. The system of claim 1, wherein the first sensor is configured to detect that a top edge of a second object is in line with an object conveyor.

14. A method comprising:
causing a transport apparatus to move a unit through an interior area of a support structure of an apparatus, wherein the unit comprises an object and a pallet configured to support the object;
detecting, using a first sensor of a plurality of sensors, that a bottom edge of the object is in line with an object conveyor, wherein each of the plurality of sensors is configured to monitor a portion of the interior area; and
causing a first manipulator of one or more manipulators to perform a first pick and place operation when the bottom edge of the object is in line with the object conveyor.

15. A method comprising:
causing a transport apparatus to move a unit through an interior area of a support structure of an apparatus, wherein the unit comprises an object and a pallet configured to support the object;
detecting, using a first sensor of a plurality of sensors, that a top edge of the object is in line with an object conveyor, wherein each of the plurality of sensors is configured to monitor a portion of the interior area; and
causing a first manipulator of one or more manipulators to perform a second pick and place operation when the top edge of the object is in line with the object conveyor.
